# EUROPÄISCHE PATENTSCHRIFT

(11) **EP 1 292 634 B1**
(45) Veröffentlichungstag und Bekanntmachung des Hinweises auf die Patenterteilung: **07.12.2005**
(21) Anmeldenummer: 01943446.3
(22) Anmeldetag: 25.05.2001
(51) Int. Cl.: C08J 5/22, C08J 3/09

(54) **PERFLUORSULFONSÄURE-MENBRANEN, VERFAHREN ZU IHRER HERSTELLUNG UND VERWENDUNG FÜR BRENNSTOFFZELLEN**
PERFLUOROSULFONIC ACID MEMBRANES, METHOD FOR THE PRODUCTION AND USE THEREOF FOR FUEL CELLS
MEMBRANES D'ACIDE PERFLUOROSULFONIQUE, LEUR PROCEDE DE PRODUCTION ET LEUR UTILISATION POUR DES CELLULES ELECTROCHIMIQUES

(30) Priorität: 26.05.2000 DE 10025937
(43) Veröffentlichungstag der Anmeldung: 19.03.2003
(73) Patentinhaber: FuMA-Tech Gesellschaft für funktionelle Membranen- und Anlagentechnologie mbH, 66386 St. Ingbert/Saar (DE)
(72) Erfinder: BAUER, Bernd, 71665 Vaihingen (DE)
(74) Vertreter: Ruff, Michael
(86) Internationale Anmeldenummer: PCT/EP2001/005981
(87) Internationale Veröffentlichungsnummer: WO 2001/092383

(56) Entgegenhaltungen:
- DE-A- 3 843 813
- GB-A- 1 286 859
- US-A- 4 433 082
- US-A- 4 707 422
- US-A- 5 863 610
- MOORE R B III ET AL: "Chemical and Morphological Properties of Solution-Cast Perfluorosulfonate Ionomers" MACROMOLECULES, AMERICAN CHEMICAL SOCIETY. EASTON, US, Bd. 21, 1988, Seiten 1334-1339, XP002155037 ISSN: 0024-9297
- GEBEL G ET AL: "SWELLING STUDY OF PERFLUOROSULPHONATED IONOMER MEMBRANES" POLYMER, JORDAN HILL, OXFORD, GB, Bd. 34, Nr. 2, 1993, Seiten 333-339, XP000984351 ISSN: 0032-3861
- PELLEGRINO J ET AL: "GAS TRANSPORT PROPERTIES OF SOLUTION-CAST PERFLUOROSULFONIC ACID IONOMER FILMS CONTAINING IONIC SURFACTANTS" JOURNAL OF MEMBRANE SCIENCE, ELSEVIER SCIENTIFIC PUBL.COMPANY. AMSTERDAM, NL, Bd. 84, Nr. 1/2, 23. September 1993 (1993-09-23), Seiten 161-169, XP000453739 ISSN: 0376-7388

## Beschreibung

Die Erfindung betrifft Perfluorsulfonsäure-Membranen, Verfahren zu ihrer Herstellung und Verwendung für Brennstoffzellen. Eine Brennstoffzelle wandelt chemische Energie im wesentlichen kalt direkt in elektrische Energie um. Dabei liegt der Wirkungsgrad moderner Brennstoffzellen bei bis zu 85 %. Eine Brennstoffzelle enthält eine Anode, an der Brennstoff (Wasserstoff oder wasserstoffreiche Gase, wie Methanol) zuströmt und eine Kathode, an der das Oxidationsmittel (Luft oder Sauerstoff) zuströmt. Die beiden Elektroden sind durch einen elektrolytischen Ionenleiter voneinander getrennt. Beim Verwenden einer Folie als elektrolytischen Ionenleiter spricht man von einer PEM-Brennstoffzelle (PEM = Polymer-Elektrolyt-Membran). Polymerelektrolytmembran-Brennstoffzellen (PEMFC) in Kombination mit einem elektrischen Antriebssystem werden mittel- bis langfristig konventionelle Otto- und Dieselmotoren auf Grund ihres höheren Wirkungsgrades und des drastisch verminderten Schadstoffaustoßes weitgehend ersetzen.

Methanol stellt für zukünftige Fahrzeugantriebe mit Brennstoffzellen eine interessante Option dar, da es aus Erdgas in ausreichenden Mengen gewonnen, einfach transportiert und gespeichert werden kann. Gegenwärtig werden zwei Entwicklungslinien von methanolgespeisten Brennstoffzellensystemen bearbeitet. Dabei handelt es sich zum einen um das System der indirekten Methanol-Brennstoffzelle, bei dem Wasserstoff aus Methanol durch eine Methanolreformierung gewonnen wird. Beim zweiten System handelt es sich um die Direkt-Methanol-Brennstoffzelle (DMFC), bei der Methanol in der Zelle direkt elektrochemisch umgesetzt wird. Bei der Direkt-Methanol-Brennstoffzelle wird an der Kathode Sauerstoff oder Luft zugeführt und reduziert. An der Anode wird gleichzeitig flüssiger oder gasförmiger Methanol zugeführt und zu Kohlendioxid oxidiert. Damit erhält die-Membran die Aufgabe zur Trennung der beiden Reaktionsräume, d.h. zur Verhinderung einer Methanol- und Kohlendioxid-Permeation in den Kathodenraum und gleichzeitig zur elektrochemischen Verbindung der beiden Elektroden. Solche Brennstoffzellen brauchen auf Grund der Betriebsbedingungen weder zusätzlich befeuchtet noch bei Frost gegen Gefrieren geschützt zu werden. Andererseits müßten PEMFC- und DMFC-Membranen folgende Eigenschaften besitzen bzw. Anforderungen erfüllen:
- chemische und elektrochemische Stabilität unter Betriebsbedingungen
- mechanische Stabilität
- Oberflächeneigenschaften kompatibel mit den übrigen Bauteilen der Membran-Elektroden-Anordnung
- hohe Elektrolyt-Permeabilität, um lokale Austrocknung zu vermeiden
- maximale Protonen-Permeabilität
- Vermeidung einer elektrischen Leitfähigkeit
- geringe Produktionskosten

Im Vergleich zu Membranen, die in der klassischen Methanol-Zelle unter Anwendung der Reformertechnik eingesetzt werden, ist es zusätzlich für eine DMFC-Membran erforderlich, daß sie eine erhöhte Betriebstemperatur aushält und eine geringe Permeabilität für Methanol besitzt.

Bekannte Membranen erfüllen diese erhöhten Anforderungen nicht im geforderten Maße. Dies führt dazu, daß der aus dem Anodenkreislauf über die Membran diffundierende Methanol die Gegenelektrode vergiftet und den elektrochemischen Wirkungsgrad verringert.

Bisher werden als Membranmaterial perfluorierte Protonenleiter, wie z.B. Nafion^{R} (Membranen aus Perfluorsulfonsäurepolymeren, Marke der Firma Du Pont) eingesetzt. Es gibt auch davon abgeleitete Membranen von Gore, Dow oder Asahi Chemicals. Diese Membranen haben ihre maximale Einsatztemperatur bei ca. 100 bis 130°C und eine eingeschränkte Anwendbarkeit auf Grund hoher Methanoldiffusion. Zum Teil sind sie auf Grund hoher Produktionskosten sehr teuer.

Der Erfindung liegt die Aufgabe zu Grunde, Membranen insbesondere für Polyelektrolytmembran-Brennstoffzellen (PEMFC) und Direkt-Methanol-Brennstoffzellen (DMFC) zu schaffen, die die obigen Eigenschaften besitzen und Anforderungen erfüllen. Dabei sind insbesondere geringe Produktionskosten, maximale Protonen-Permeabilität und bei einer DMFC-Membran geringe Methanol-Permeabilität und hohe Temperaturstabilität von Bedeutung.

Perfluorsulfonsäure-Polymere (z.B. Nafion^{R}) sind in Form des Polymers, in Form fertiger Membranen und in Form von wässrig alkoholischen Dispersionen auf dem Markt. Als Alkohole kommen insbesondere Ethanol und Isopropanol in Frage. Auf Grund der Vielzahl der Sulfonsäuregruppen im Polymer saugen die Polymere so viel Wasser, daß sich Hohlräume bilden. Dies führt zu einer sogenannten Clusterbildung in Form von sehr feinen Kanälen durch die Membran, wobei die Kanalinnenwandung mit den Sulfonsäuregruppen besetzt ist. Die Kanäle besitzen einen Innendurchmesser von ca. 5 A. Durch diese Kanäle erfolgt die Protonenleitung, die für die Funktion einer Brennstoffzelle wichtig ist.

Die Herstellung der wässrig alkoholischen Dispersionen erfolgt in der Weise, daß Persulfonsäurepolymere in wässrig alkoholischem Medium im Autoklaven bei ca. 42°C und einem Druck von ca. 6 bar erhitzt werden. Dabei findet eine Konversion der Ionenkanäle statt. Es bilden sich Partikel des Persulfonsäurepolymers, bei denen die Sulfonsäurereste an der Außenoberfläche liegen. Die erhaltenen Dispersionen können zu Membranen gegossen werden. Beim Erhitzen auf ca. 120 bis 150°C findet wieder eine Umkehr der Konversion statt, so daß Membranen mit Clusterbildung bzw. Ionenkanälen erhalten werden. Solche Membranen haben zwar recht gute Eigenschaften bei der elektrochemischen Umwandlung von Wasserstoff/Sauerstoffgemischen. Sie sind jedoch nicht geeignet für Direkt-Methanol-Brennstoffzellen.

Es ist bekannt, daß sich Persulfonsäure-Polymere in bestimmten Lösungsmitteln auflösen lassen. Bei diesen Lösungsmitteln handelt es sich um aprotisch dipolare Lösungsmittel. Besonders geeignete aprotisch dipolare Lösungsmittel sind Dimethylacetamid, Dimethylformamid (DMF), Dimethylsulfoxid (DMSO), N-Methy-Pyrrolidon und/oder Acetonitril. N-Methyl-Pyrrolidon ist bevorzugt, insbesondere für Perfluorsulfonsäure-Polymere in saurer Form, die weniger gut löslich sind als die Perfluorsulfonsäure-Polymere in Salzform. Im folgenden soll der Ausdruck Perfluorsulfonsäure-Polymer sowohl die Säureform als auch die Salzform und Mischungen davon umfassen.

Perfluorsulfonsäure-Polymere, wie sie für die Erfindung Verwendung finden sind beispielsweise in der DE 42 11 267 C2 (Seite 7) und in der Veröffentlichung von O. Sawadogo "Emerging membrans for electrochemical systems: (I) Solid polymer electrolyt membrans for fuel cell systems in journal of new materials for electrochemical systems I, 47-66 1998), beschrieben. Bei den dort erwähnten alkoholischen Lösungen von Nafion handelt es sich nicht um richtige Lösungen sondern um die oben beschriebenen Dispersionen. Die Verwertungsmöglichkeiten solcher Dispersionen ist im Vergleich zu den Lösungen der Perfluorsulfonsäure-Polymere in aprotisch dipolaren Lösungsmitteln begrenzt. Im Gegensatz zu den alkoholischen Dispersionen zeigen die Lösungen der Perfluorsulfonsäure in aprotisch dipolaren Lösungsmitteln keine Lichtstreuung bzw. keinen Tyndall-Effekt, woraus sich ergibt, daß die Polymere, soweit dies bei Polymeren der Fall ist, in echter Lösung vorliegen. Durch Verdampfung des aprotisch dipolaren Lösungsmittels oder durch an sich bekannte Fällungs- bzw. Verdrängungsreaktionen kann das Perfluorsulfonsäure-Polymer in fester Form erhalten werden und zeigt dann andere Eigenschaften als die bekannten Polymere, die durch Anlagerung der dispergierten Feststoffteile aus den wässrig alkoholischen Dispersionen erhalten sind. Dies zeigt sich beispielsweise bei einem Vergleich von aus der Lösung bzw. Dispersion hergestellten Membranen. Die Konzentration der Perfluorsulfonsäure-Polymere in den aprotisch dipolaren Lösungsmitteln kann in weiten Grenzen liegen. In der Regel liegt sie im Bereich von 1 bis 300 g/l, insbesondere 50 bis 180 g/l. Aus praktischen Gründen kann auch mit den Konzentrationen gearbeitet werden, in denen normalerweise das Perfluorsulfonsäure-Polymer in den alkoholischen Dispersionen vorliegt, beispielsweise 5 oder 10 Gewichtsprozent.

Wie nachfolgend beschrieben wird, eignen sich die Lösungen der Perfluorsulfonsäure-Polymere in aprotisch dipolaren Lösungsmitteln zur Herstellung von sogenannten Polymerblends, das sind homogene Mischungen der Perfluorsulfonsäure-Polymere mit mindestens einem weiteren Polymer. Derartige Polymerblends bzw. Mischungen sind Gegenstand der Erfindung. Durch die Herstellung solcher Polymerblends lassen sich die Eigenschaften der Polymere gezielt beeinflussen, insbesondere im Hinblick auf ihre Verwendbarkeit als Membranen. Als weitere Polymere für die Herstellung der Polymerblends eignen sich besonders solche mit einem hohen Dipolmoment. Hierzu gehören insbesondere Fluor-Polymere, wie Polyvinylidenfluorid, und Polysulfone wie Polyvinylethersulfon.

Das Mischungsverhältnis von Perfluorsulfonsäure-Polymer zu weiterem Polymer kann im Bereich zu 0,5:99,5 bis 99,5:0,5 liegen und liegt in der Regel zwischen 5:95 und 95:5. Je nach Art des Blendpolymers sind bestimmte Mengenverhältnisse bevorzugt. So liegt der Gehalt an Polyvinylidenfluorid in der Gesamtmasse vorzugsweise zwischen 0,5 und 60 Gewichtsprozent und bei Polyvinylethersulfon zwischen 0,5 und 40 Gewichtsprozent. Es sind aber auch Mischungen möglich, die nur einen geringen Anteil an Perfluorsulfonsäure-Polymer enthalten.

Als weitere Blendpolymere kommen die nachfolgenden in Frage, wobei die bevorzugten Mengen in Klammern angegeben sind: Copolymere des Vinylidenflourids mit Hexafluorpropylen (PVDF/HFP) (0,5 bis 50 Gewichtsprozent); Polysulfon (PSU) (0,5 bis 15 Gewichtsprozent); Polyethersulfon (PES) (0,5 bis 25 Gewichtsprozent); Polyimide (PI) (0,5 bis 10 Gewichtsprozent); Polybenzimidazole (PBI) (0,5 bis 20 Gewichtsprozent); sulfonierte Produkte von Udel, Radel, Victrex, Hostatec, Ultrapek (sPSU,sPES,sPPSU,sPEEKK,sPEK); sulfonierte Styrol/Ethylen-Copolymere (sSES); sulfonierte Styrol/Butadien-Copolymere (sSBS,sSIS). Weiter in Frage kommende Polymere für die Polymerblends sind Polyphenylenoxid (PPO), Polyphenylensulfid (PPS), Polyaryletherketon (PEK's), Polybenzazol (PBZ), Polybenzoxazol (PBO), Polyamide (PA), Polyethylentherephthalat (PET).

In die Blendpolymere können anorganische und organische Verbindungen von Oxyden eingelagert sein, die sich insbesondere an den sauren Gruppen der Blendpolymere anlagern und auch Vernetzungen der Polymere bilden. Hierzu kommen insbesondere oxydische Verbindungen von Titan, Zirkonium und Silizium in Frage, wobei die Siliziumverbindungen bevorzugt sind. Eine geeignete Siliziumverbindung ist Tetraethoxysilikat (TEOS). Eine weiterhin geeignete Verbindung ist Aminophenyltrimethoxysilan (APTMOS). Auch Mischungen von metalloxydischen Verbindungen sind möglich. Ferner geeignet zur Modifizierung der sauren Polymere sind Siliziumoxydpartikel die unter dem Handelsnamen Ludox bekannt sind. Die Oberfläche dieser Ludoxpartikel kann mit APTMOS Molekülen besetzt sein, so dass die Partikel an der Oberfläche Ammoniumgruppen aufweisen, die ihrerseits wiederum in Wechselwirkung mit den sauren Gruppen der Polymere treten können. Als saure Polymere kommen vorzugsweise Polyetheretone in Frage. Weiterhin können in die Polymere auch Zirkoniumphosphate und/oder Zirkoniumsulfophenylphosphate eingelagert sein.

Als weitere Blendpolymere kommen in Frage Mischungen aus einem Polyfluorsulfonsäurepolymer und einem Copolymeren aus Vinylidenfluorid mit 5-Methylvenylpyridin. Es ist weiterhin möglich durch eine alkalische Nachbehandlung Fluorwasserstoff aus Polyvinylidenfluorid bzw. dessen Copolymeren abzuspalten. Weiterhin geeignet sind Blendpolymere aus Polyfluorsulfonsäure und einem cardo-Polybenzimidazol.

Sind die Polymere zu Membranen geformt, dann können dieses mehrschichtig als Verbund- oder Kompositmembranen ausgebildet sein. So kann eine Kompositmembran aus einem fluorierten Polysulfon eine Deckschicht aus einem Blendpolymer bzw. gemischten Polymer besitzen.

Geeignete Lösungsmittel sind oben bereits erwähnt, wobei Dimethylformamid, Dimethylacetamid, Dimethylsulfoxid und insbesondere N-Methyl-2-Pyrrolidon, bevorzugt sind. Diese Lösungsmittel sind sowohl Lösungsmittel für das Perfluorsulfonsäure-Polymer als auch für die weiteren Polymere, insbesondere solche mit einem hohen Dipolmoment. Es lassen sich in diesen Lösungsmitteln gemeinsame Lösungen herstellen, aus denen sich Polymerblends, insbesondere in Membranform, mit gezielten Eigenschaften im Hinblick auf Brennstoffzellen und andere Anwendungszwecke gewinnen lassen.

Aus den gemeinsamen Lösungen lassen sich die Polymerblends in fester Form nach herkömmlichen Techniken herstellen, beispielsweise in Form von Folien bzw. Membranen. Die Fertigung von Folien bzw. von Membranen kann durch Aufgießen bzw. Aufstreichen der Lösungen auf feste Unterlagen und Eindampfen des Lösungsmittels erfolgen. Auch andere Techniken sind möglich.

Durch die Verblendung der Perfluorsulfonsäure-Polymere mit dem mindestens einem weiteren Polymer wird der Anteil an Perfluorsulfonsäure-Polymer je nach Menge des weiteren Polymers verringert. Obwohl das Perfluorsulfonsäure-Polymer die Grundeigenschaften einer Membran für Brennstoffzellen bedingt, hat es sich herausgestellt, daß durch die Verdünnung bzw. anteilige Verminderung an Perfluorsulfonsäure-Polymer die gewünschten Eigenschaften der Polymermembran, wie hohe Protonenleitfähigkeit, praktisch nicht beeinträchtigt werden. Es lassen sich jedoch wesentlich erwünschte Vorteile erzielen, wie hohe Temperaturfestigkeit und hoher Diffusionswiderstand gegenüber Methanol. Dadurch eignen sich Membranen, die aus den Polymerblend bestehen, in hervorragender Weise nicht nur für Brennstoffzellen, die mit Wasserstoff und Luft bzw. Sauerstoff arbeiten, sondern in hervorragender Weise auch für Direkt-Methanol-Brennstoffzellen, da die den bisher bekannten Membranmaterialien anhängenden Nachteile überwunden werden. So können aus den erfindungsgemäßen Blendlösungen sehr dünne, fehlstellenfreie Membranen hergestellt werden. Dies bedingt einerseits eine sehr kostengünstige Fertigung als auch eine hohe Ionenleitfähigkeit. Überraschenderweise wurde gefunden, daß die Blend-Membranen ein hervorragendes Quellvermögen besitzen und Wasser auch bei Betriebstemperaturen von deutlich über 100°C in dem Maße halten können, das für die Direkt-Methanol-Brennstoffzellen gewünscht ist.

Die Anwendung der erfindungsgemäßen Polymerblends, insbesondere in Membranform, ist nicht auf Brennstoffzellen beschränkt. Es sind auch andere Anwendungsmöglichkeiten gegeben. So sind sie auch als Membranen für Batterien geeignet und allgemein zum Einsatz bei Elektromembranverfahren, wie der Elektrodialyse, insbesondere für die Natriumhypochlorit- und die Chlordioxidherstellung, die (stromfreie) Diffusionsdialyse und die bipolare Membrantechnik. Es wurde auch gefunden, daß kleine Mengen Perfluorsulfonsäure-Polymer in hervorragender Weise dazu verwendet werden können, andere Polymere bzw. Membranmaterialien hydrophil zu machen, was in vielen Fällen erwünscht ist. So können beispielsweise hydrophobe Polyvinylidenflouride, die als Mikrofiltrationsmembranen Anwendung finden, durch geringe Beimengungen an Perfluorsulfonsäure-Polymere gemäß der Erfindung bis zum gewünschten Grade hydrophilisiert werden.

Die Erfindung betrifft auch ein Verfahren zur Herstellung von Mischungen aus Perfluorsulfonsäure-Polymeren mit weiteren Polymeren in Lösung und als Festsubstanz. Die Herstellung erfolgt vorzugsweise durch Aufnahme von Perfluorsulfonsäure-Polymeren in aprotisch dipolaren Lösungsmitteln. Dabei können die Perfluorsulfonsäure-Polymere in der Form als Ausgangsmaterial verwendet werden, in der sie im Handel sind, insbesondere in Form der wässrig alkoholischen Dispersionen, die in der Regel ca. 5% Wasser zur Stabilisation der Polymere enthalten. Es ist aber auch möglich, feste Polymere in den aprotisch dipolaren Lösungsmitteln aufzulösen. Die Aufnahme der Perfluorsulfonsäure-Polymere erfolgt vorzugsweise nach einer und/oder während einer Erwärmung. Dabei hat es sich als vorteilhaft erwiesen, daß die Erwärmung unter Umgebungsdruck vorgenommen werden kann. Normalerweise erfolgt das Erwärmen der Perfluorsulfonsäure-Polymere in Gegenwart von Lösungsmitteln, nämlich den aprotisch dipolaren Lösungsmitteln bzw. Lösungsmittelmischungen, die diese enthalten. Die Erwärmung kann bei Badtemperaturen im Bereich zwischen 150 und 250°C vorgenommen werden. Zweckmäßigerweise kann unter Rückflußtemperatur der aprotisch dipolaren Lösungsmittel gearbeitet werden.

Bei einer bevorzugten Ausführungsform werden wässrig alkoholische Dispersionen der Perfluorsulfonsäure-Polymere durch Zugabe von aprotisch dipolaren Lösungsmitteln und Verdampfen von Wasser und Alkohol in die Lösung der Perfluorsulfonsäure-Polymere in den aprotisch dipolaren Lösungsmitteln überführt. Dies ist dadurch möglich, daß die aprotisch dipolaren Lösungsmittel einen höheren Siedepunkt besitzen als Wasser und Alkohol.

Bei einer anderen Ausführungsform des erfindungsgemäßen Verfahrens werden Perfluorsulfonsäure-Polymere in festem Zustand eingesetzt bzw. zunächst aus wässrig alkoholischen Dispersionen hergestellt. Diese festen Polymere können durch Erhitzen auf Temperaturen zwischen 200 und 300°C oder mehr in Abwesenheit von Lösungsmitteln in eine Zustandsform überführt werden, die in aprotisch dipolaren Lösungsmitteln löslich ist und in diesen aufgenommen werden kann. Aus den Lösungen der Perfluorsulfonsäure-Polymere in den aprotisch dipolaren Lösungsmitteln können durch Verdampfen der Lösungsmittel feste Polymere erhalten werden, die eine sehr homogene Struktur besitzen und in vielen Punkten den festen Polymeren, die aus den Dispersionen hergestellt sind, überlegen sind. Die erfindungsgemäße Anwendbarkeit der Lösungen besteht in der Weiterverarbeitung dieser Lösungen in Gegenwart weiterer Polymere, insbesondere in deren gelöster Form. Als weitere Polymere werden insbesondere solche verwendet, die mit den Perfluorsulfonsäure-Polymeren homogen mischbar sind und insbesondere auch in den aprotisch dipolaren Lösungsmitteln löslich sind. Durch gemeinsames Auflösen in diesen Lösungsmitteln oder Vermischen von getrennt hergestellten Lösungen lassen sich die gelösten Polymermischungen gewinnen. Durch Entfernen, insbesondere Verdampfen, des Lösungsmittels sind die Polymermischungen bzw. Polymerblends in fester Form erhältlich.

Weitere Merkmale der Erfindung ergeben sich aus der nachfolgenden Beschreibung bevorzugter Ausführungsformen anhand von Beispielen in Verbindung mit den Unteransprüchen.

### Beispiel 1: Herstellung einer Polymerlösung von Perfluorsulfonsäuren in Methylpyrrolidon.

Die kommerziell erhältliche 5%ige kolloidale Lösung von Nafion^{R} (saure Form) in Alkoholen (Aldrich) wird unter Inertgas in einer Destillationsapparatur mit 3-Hals Rundkolben, Rührwerk, Tropftrichter und Destillationsbrücke zum Sieden erhitzt. Nach etwa einer Stunde am leichten Rückfluss wird der Alkohol langsam abdestilliert. Gleichzeitig wird isovolumetrisch N-Methylpyrrolidon dosiert. Die Lösung wird durch langsame Temperaturerhöhung am Sieden gehalten. Nach Abdestillieren des gesamten Alkohols wird bei einer Badtemperatur von etwa 240°C eine völlig klare echte 5%ige Lösung der Perfluorsulfonsäure in N-methylpyrrolidon erhalten.

### Bespiel 2: Herstellung einer Polymerlösung von Penfluorsulfonsäure Lithiumsalzen in Dimethylformamid

Die kommerziell erhältliche 10%ige kolloidale Lösung von Nafion^{R} in iso-Propanol (DuPont) wird unter Inertgas in einer Destillationsapparatur mit 3-Hals Rundkolben, Rührwerk, Tropftrichter und Destillationsbrücke unter Zugabe einer 3% alkoholischen Lösung von Lithiumhydroxid unter starkem Rühren neutralisiert. Die opaleszierende, kolloidale Lösung wird dann zum Sieden erhitzt. Nach etwa einer Stunde am leichten Rückfluss wird der Alkohol langsam abdestilliert. Gleichzeitig wird Dimethylformamid dosiert. Die Lösung wird durch langsame Temperaturerhöhung am Sieden gehalten. Nach Abdestillieren des gesamten Alkohols wird bei einer Badtemperatur von etwa 180°C eine völlig klare echte 8-12%ige Lösung des Perfluorsulfonsäure Lithiumsalzes in Dimethylformamid erhalten.

### Beispiel 3: Herstellung einer Polymerlösung von Perfluorsulfonsäure Kaliumsalzen in Dimethylacetamid

Die kommerziell erhältliche 15%ige kolloidale Lösung von Nafion^{R} in iso-Propanol (DuPont) wird unter Inertgas in einer Destillationsapparatur mit 3-Hals Rundkolben, Rührwerk, Tropftrichter und Destillationsbrücke unter Zugabe einer 2% alkoholischen Lösung von Kaliumhydroxid unter starkem Rühren neutralisiert. Die opaleszierende, kolloidale Lösung wird dann zum Sieden erhitzt. Nach etwa einer Stunde am leichten Rückfluss wird der Alkohol langsam abdestilliert. Gleichzeitig wird Dimethylacetamid dosiert. Die Lösung wird durch langsame Temperaturerhöhung am Sieden gehalten. Nach Abdestillieren des gesamten Alkohols wird bei einer Badtemperatur von etwa 210°C eine völlig klare echte 8-15%ige Lösung des Perfluorsulfonsäure Kaliumsalzes in Dimethylacetamid erhalten.

### Beispiel 4: Herstellung einer Polymerlösung von Perfluorsulfonsäure Natriumsalzen in Methylpyrrolidon

Die kommerziell erhältliche 5%ige kolloidale Lösung von Nafion^{R} in Alkoholen (Aldrich) wird auf einer Beschichtungsanlage an einem Rakelmesser zu einem 80 µm dicken Film ausgezogen. Das Lösemittel wird dann im Durchlauftrockner abgedampft. Der resultierende 4 µm dicke Film wird abgezogen und mit einer 1,5% igen Natronlauge neutralisiert. Im Anschluss wird der Film wiederum im Durchlauftrockner während zwei Stunden auf 240°C erhitzt und getrocknet. Die resultierende Folie wird delaminiert, getrocknet und an einem Schnittwerkzeug in kleine Streifen geschnitten. Nun wird in einem Vakuum-Dissolver das Lösungsmittel N-Methylpyrrolidon vorgelegt. Die Streifen des Perfluorsulfonsäure Natriumsalzes werden langsam in den Vakuum-Dissolver unter starkem Rühren eingebracht und nach Temperaturerhöhung am Rückfluss zu einer etwa 9%igen klaren Lösung verarbeitet.

### Beispiel 5: (Vergleichsbeispiel Stand der Technik) Herstellung einer protonenleitenden Membran aus der kolloidalen Dispersion einer Perfluorsulfonsäure (Referenzmembran, -SO₃H, unverstärkt)

Die kommerziell erhältliche 10%ige kolloidale Dispersion von Nafion^{R} in iso-Propanol (DuPont) wird auf einer Beschichtungsanlage an einem Reverse-Roll-Coater zu einem 250 µm dicken Film ausgezogen. Das Lösungsmittel wird dann im Durchlauftrockner bei 65°C abgedampft. Der resultierende 29 µm dicke vollkommen transparente Film wird dann in einem zweiten Durchlauftrockner während 30 Minuten bei 180°C nachgetempert. Die resultierende Membran wird schließlich trocken delaminiert.

### Charakteristische Daten:

| | |
|---|---|
| Ionenaustauscherkapazität | 1,06 meq/g Membran (nach Titration) |
| Spezifische Leitfähigkeit | 0,011 S/cm |
| Permselektivität | 89% |
| Wasseraufnahme | 35% der trockenen Membran |

Die Wasseraufnahme dieser Membran ist unerwünscht hoch.

### Beispiel 6: Herstellung einer protonenleitenden Membran aus der Lösung einer Perfluorsulfonsäure (homogene-Membran aus Lösung, erfindungsgemäß)

Die 5%ige Lösung einer Perfluorsulfonsäure in N-Methylpyrrolidon aus Ausführungsbeispiel (1) wird auf einer Beschichtungsanlage an einem Reverse-Roll-Coater zu einem 400 µm dicken Film ausgezogen. Das Lösemittel wird dann im Durchlauftrockner bei 65°C abgedampft. Der resultierende 26 µm dicke vollkommen transparente Film wird dann in einem zweiten Durchlauftrockner während 30 Minuten bei 190°C nachgetempert. Die resultierende Membran wird schließlich trocken delaminiert.

### Charakteristische Daten:

| | |
|---|---|
| Ionenaustauscherkapazität | 1,05 meq/g Membran (nach Titration) |
| Spezifische Leitfähigkeit | 0,0055 S/cm |
| Permselektivität | 94,2% |
| Wasseraufnahme | 28% der trockenen Membran |

Die Membran besitzt eine hohe Selektivität bei guter aber nicht zu hoher Wasseraufnahme.

### Beispiel 7: Herstellung einer protonenleitenden Blendmembran mit PPSU aus der Lösung einer Perfluorsulfonsäure (Blendmembran aus Lösung, erfindungsgemäß)

Die 10%ige Lösung des Li-Salzes einer Perfluorsulfonsäure in Dimethylformamid aus Ausführungsbeispiel (2) wird mit einer 10%igen Lösung von Polyphenylethersulfon (Amoco, Radel^{R}) im Verhältnis 90:10 zusammengeführt und während 15 Minuten unter Rühren und Argon-Schutzgas bei einer Badtemperatur von 175°C erhitzt. Die entstandene nur leicht opaleszierende, farblose Lösung wird auf einer Beschichtungsanlage an einem Reverse-Roll-Coater zu einem 300 µm dicken Film ausgezogen. Das Lösemittel wird dann im Durchlauftrockener bei 75°C abgedampft. Der resultierende 32 µm dicke vollkommen transparente Film wird dann in einem zweiten Durchlauftrockner während 30 Minuten bei 175°C nachgetempert. Die resultierende Membran wird schließlich trocken delaminiert.

### Charakteristische Daten:

| | |
|---|---|
| Ionenaustauscherkapazität | 0,91 meq/g Membran (nach Titration) |
| Spezifische Leitfähigkeit | 0,0045 S/cm |
| Permselektivität | 93,9% |
| Wasseraufnahme | 17% der trockenen Membran |

Die Membran ist für Direkt-Methanol-Verbrennung geeignet, da geringer Alkoholdurchbruch.

### Beispiel 8: Herstellung einer protonenleitenden Blendmembran mit PVDF aus der Lösung einer Perfluorsulfonsäure (Blendmembran aus Lösung, erfindungsgemäß)

Die 12%ige Lösung des K-Salzes einer Perfluorsulfonsäure in Dimethylacetamid aus Ausführungsbeispiel (3) wird mit einer 15%igen Lösung von Polyvinylidenfluorid (Solvay, Solef^{R} 11010) im Verhältnis 90:10 zusammengerührt und während 15 Minuten unter Rühren und Argon-Schutzgas bei einer Badtemperatur von 175°C erhitzt.
Die klare und farblose Lösung wird auf einer Beschichtungsanlage an einem Reverse-Roll-Coater zu einem 300 µm dicken Film ausgezogen. Das Lösemittel wird dann im Durchlauftrockner bei 75°C abgedampft. Der resultierende 42 µm dicke vollkommen transparente Film wird dann in einem zweiten Durchlauftrockner während 30 Minuten bei 175°C nachgetempert. Die resultierende Membran wird schließlich trocken delaminiert.

### Charakteristische Daten:

| | |
|---|---|
| Ionenaustauscherkapazität | 0,91 meq/g (nach Titration) |
| Spezifische Leitfähigkeit | 0,0072 S/cm |
| Permselektivität | 92,4% |
| Wasseraufnahme | 13% der trockenen Membran |

Diese Membran ist besonders gut für die Verbrennung von H₂ / O₂ bzw. Luft geeignet.

Das nachfolgende Diagramm zeigt die besonders hohe Belastbarkeit von Brennstoffzellen, die mit den Blendmembranen nach Beispiel 7 und 8 ausgerüstet sind. Sie brechen selbst bei Stromdichten von 2,5 A/cm² noch nicht zusammen.

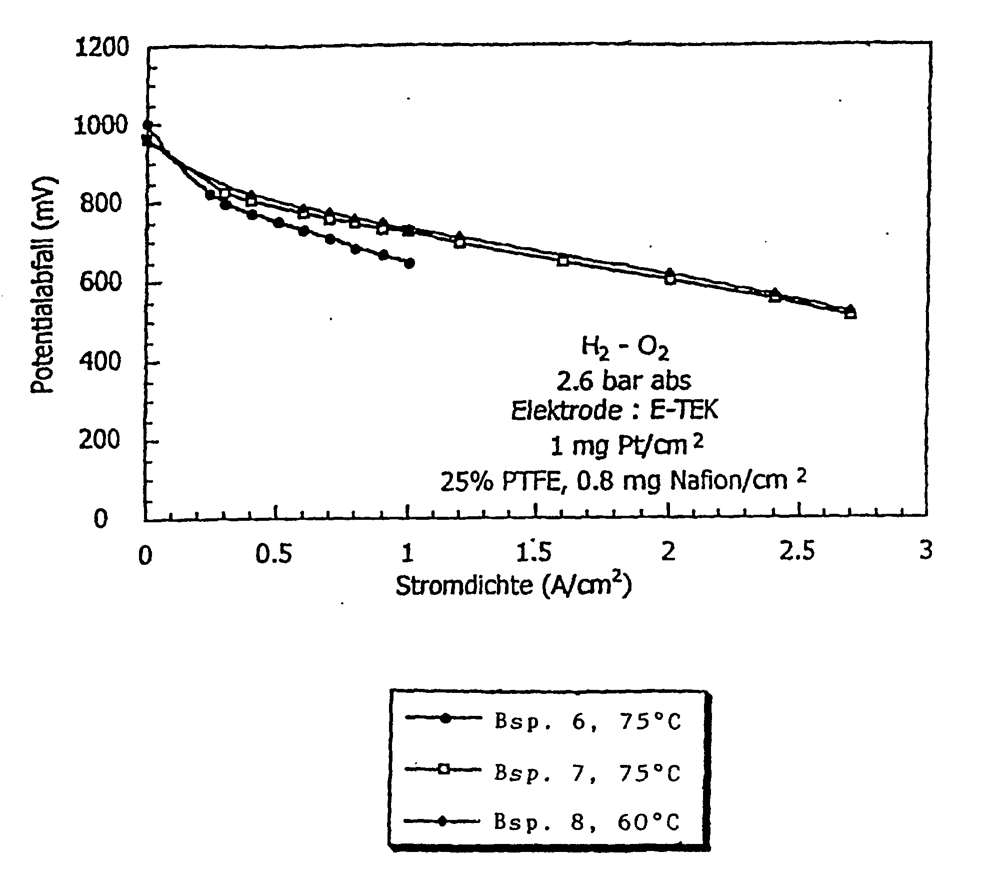

## Patentansprüche

1. Perfluorsulfonsäure-Polymer, das in homogener Mischung mit mindestens einem weiteren Polymer vorliegt, **dadurch gekennzeichnet, dass** das weitere Polymer mindestens eines aus der Gruppe umfassend Vinylidenfluorid/Hexafluorpropylen Copolymere (VF/HFP). Polysulfone (PSU), Polyethersulfone (PES), insbesondere Polyphenylethersulfon, Polyphenylenoxide (PPO), Polyphenylensulfide (PPS), Polyaryletherketone (PEK), Polyamide (PA), Polyimide (PI), Polybenzazol (PBZ), Polybenzoxazol (PBO), Polybenzimidazol (PBI), Polyethylentherephthalat (PET), sulfonierte Polysulfone (sPSU), insbesondere sulfonierte Polyphenylensulfone (sPPSU), sulfonierte Polyethersulfone (sPES), sulfonierte Polyetherketone (sPEK), sulfonierte Polyetheretherketonketone (sPEEKK), sulfonierte Styrol/Ethylen Copolymere (sSES) und sulfonierte Styrol/Butadien Copolymere (sSBS/sSIS) ist.

2. Perfluorsulfonsäure-Polymer nach Anspruch 1, **dadurch gekennzeichnet, dass** es in mindestens einem seiner Bestandteile, die saure Gruppen aufweisen, organische und/oder anorganische oxidische Verbindungen von Titan, Zirkon und insbesondere Silizium enthält.

3. Perfluorsulfonsäure-Polymer nach Anspruch 1 oder 2, **dadurch gekennzeichnet, dass** in der Polymermischung Zirkoniumphosphate und/oder Zirkoniumsulfophenylphosphate enthalten sind.

4. Perfluorsulfonsäure-Polymer nach einem der vorhergehenden Ansprüche, **dadurch gekennzeichnet, dass** die Mischung in Form einer Lösung in einem Lösungsmittel, insbesondere in einem aprotisch dipolaren Lösungsmittel, vorliegt.

5. Perfluorsulfonsäure-Polymer nach einem der Ansprüche 1 bis 4, **dadurch gekennzeichnet, dass** die Mischung in Form eines homogenen trockenen Polymerblends vorliegt, der insbesondere aus der Lösung nach Anspruch 2 erhältlich ist.

6. Perfluorsulfonsäure-Polymer nach einem der vorhergehenden Ansprüche, **dadurch gekennzeichnet, dass** das Gewichtsverhältnis von Perfluorsulfonsäure-Polymer zu dem mindestens einen weiteren Polymer bei 99,5 zu 0,5 bis 40 zu 60 liegt.

7. Perfluorsulfonsäure-Polymer nach einem der Ansprüche 1 bis 3, 5 oder 6, **dadurch gekennzeichnet, dass** die Mischung in Form einer mindestens einschichtigen Folie, insbesondere in Form einer mindestens einschichtigen Membran, vorliegt.

8. Verwendung von Perfluorsulfonsäure-Polymer-Membranen nach Anspruch 7 in Brennstoffzellen, insbesondere Direkt-Methanol-Brennstoffzellen.

9. Brennstoffzellen, **dadurch gekennzeichnet, dass** sie Membranen nach Anspruch 7 enthalten.

10. Verfahren zur Herstellung der Polymermischungen nach einem der Ansprüche 1 bis 7, **dadurch gekennzeichnet, dass** das Perfluorsulfonsäure-Polymer und das mindestens eine weitere Polymer in mindestens einem aprotisch dipolaren Lösungsmittel gelöst werden und die Polymermischung durch Entfernen des Lösungsmittels in fester Form erhalten wird.

11. Verfahren nach Anspruch 10, **dadurch gekennzeichnet, dass** das Perfluorsulfonsäure-Polymer und das mindestens eine weitere Polymer getrennt voneinander aufgelöst werden und die Lösungen dann vereinigt werden.

## Claims

1. Perfluorosulphonic acid polymer which is present in a homogeneous mixture with at least one further polymer, **characterized in that** the further polymer is at least one from the group comprising vinylidene fluoride/hexafluoropropylene copolymers (VF/HFP), polysulphones (PSU), polyether sulphones (PES), in particular polyphenyl ether sulphone, polyphenylene oxides (PPO), polyphenylene sulphides (PPS), polyaryl ether ketones (PEK), polyamides (PA), polyimides (PI), polybenzazole (PBZ), polybenzoxazole (PBO), polybenzimidazole (PBI), polyethylene terephthalate (PET), sulphonated polysulphones (sPSU), in particular sulphonated polyphenylene sulphones (sPPSU), sulphonated polyether sulphones (sPES), sulphonated polyether ketones (sPEK), sulphonated polyether ether ketone ketones (sPEEKK), sulphonated styrene/ethylene copolymers (sSES) and sulphonated styrene/butadiene copolymers (sSBS/sSIS).

2. Perfluorosulphonic acid polymer according to Claim 1, **characterized in that** it comprises, in at least one of its constituents which have acidic groups, organic and/or inorganic oxidic compounds of titanium, zirconium and in particular silicon.

3. Perfluorosulphonic acid polymer according to Claim 1 or 2, **characterized in that** zirconium phosphates and/or zirconium sulphophenyl phosphates are present in the polymer mixture.

4. Perfluorosulphonic acid polymer according to one of the preceding claims, **characterized in that** the mixture is present in the form of a solution in a solvent, in particular in an aprotic dipolar solvent.

5. Perfluorosulphonic acid polymer according to one of Claims 1 to 4, **characterized in that** the mixture is present in the form of a homogeneous dry polymer blend which is obtainable in particular from the solution according to Claim 2.

6. Perfluorosulphonic acid polymer according to one of the preceding claims, **characterized in that** the weight ratio of perfluorosulphonic acid polymer to the at least one further polymer is 99.5:0.5 to 40:60.

7. Perfluorosulphonic acid polymer according to one of Claims 1 to 3, 5 or 6, **characterized in that** the mixture is present in the form of at least one single-layer film, in particular in the form of at least one single-layer membrane.

8. Use of perfluorosulphonic acid polymer membranes according to Claim 7 in fuel cells, in particular direct methanol fuel cells.

9. Fuel cells, **characterized in that** they comprise membranes according to Claim 7.

10. Process for preparing the polymer mixtures according to one of Claims 1 to 7, **characterized in that** the perfluorosulphonic acid polymer and the at least one further polymer are dissolved in at least one aprotic dipolar solvent and the polymer mixture is obtained in solid form by removing the solvent.

11. Process according to Claim 10, **characterized in that** the perfluorosulphonic acid polymer and the at least one further polymer are dissolved separately from one another and the solutions are then combined.

## Revendications

1. Polymère d'acide perfluorosulfonique qui se trouve en mélange homogène avec au moins un autre polymère, **caractérisé en ce que** l'autre polymère est au moins un polymère choisi dans le groupe comprenant les copolymères fluorure de vinylidène/hexafluoropropylène (VF/HFP), les polysulfones (PSU), les polyéthersulfones (PES), en particulier la polyphényléthersulfone, les polyoxyphénylènes (PPO), les poly(sulfure de phénylène)s (PPS), les polyaryléthercétones (PEK), les polyamides (PA), les polyimides (PI), le polybenzazole (PBZ), le polybenzoxazole (PBO), le polybenzimidazole (PBI), le poly(éthylène téréphtalate) (PET), les polysulfones sulfonées (sPSU), en particulier les polyphénylènesulfones sulfonées (sPPSU), les polyéthersulfones sulfonées (sPES), les polyéthercétones sulfonées (sPEK), les polyétheréthercétonecétones sulfonées (sPEEKK), les copolymères styrène/éthylène sulfonés (sSES) et les copolymères styrène/butadiène sulfonés (sSBS/sSIS).

2. Polymère d'acide perfluorosulfonique selon la revendication 1, **caractérisé en ce que** dans au moins un de ses composants qui comportent des groupes acides il contient des composés de type oxyde organiques et/ou inorganiques du titane, du zirconium et en particulier du silicium.

3. Polymère d'acide perfluorosulfonique selon la revendication 1 ou 2, **caractérisé en ce que** des phosphates de zirconium et/ou des sulfophénylphosphates de zirconium sont contenus dans le mélange de polymères.

4. Polymère d'acide perfluorosulfonique selon l'une quelconque des revendications précédentes, **caractérisé en ce que** le mélange se trouve sous forme d'une solution dans un solvant, en particulier dans un solvant aprotique dipolaire.

5. Polymère d'acide perfluorosulfonique selon l'une quelconque des revendications 1 à 4, **caractérisé en ce que** le mélange se trouve sous forme d'un alliage homogène sec de polymères qui peut être obtenu en particulier à partir de la solution selon la revendication 2.

6. Polymère d'acide perfluorosulfonique selon l'une quelconque des revendications précédentes, **caractérisé en ce que** le rapport pondéral du polymère d'acide perfluorosulfonique à l'au moins un autre polymère va de 99,5:0,5 à 40:60.

7. Polymère d'acide perfluorosulfonique selon l'une quelconque des revendications 1 à 3, 5 ou 6, **caractérisé en ce que** le mélange se trouve sous forme d'un film au moins monocouche, en particulier sous forme d'une membrane au moins monocouche.

8. Utilisation de membranes en polymère d'acide perfluorosulfonique selon la revendication 7, dans des cellules à combustible, en particulier des cellules à combustible directes au méthanol.

9. Cellules à combustible, **caractérisées en ce qu'**elles contiennent des membranes selon la revendication 7.

10. Procédé pour la préparation des mélanges de polymères selon l'une quelconque des revendications 1 à 7, **caractérisé en ce qu'**on dissout le polymère d'acide perfluorosulfonique et l'au moins un autre polymère dans au moins un solvant aprotique dipolaire et on obtient le mélange de polymères sous forme solide par élimination du solvant.

11. Procédé selon la revendication 10, **caractérisé en ce que** le polymère d'acide perfluorosulfonique et l'au moins un autre polymère sont dissous séparément l'un de l'autre et les solutions sont ensuite réunies.
